# EUROPÄISCHE PATENTSCHRIFT

(11) **EP 1 820 382 B1**
(45) Veröffentlichungstag und Bekanntmachung des Hinweises auf die Patenterteilung: **07.01.2009**
(21) Anmeldenummer: 07002785.9
(22) Anmeldetag: 09.02.2007
(51) Int. Cl.: A01C 7/04

(54) **Pneumatische Einzelkornsämaschine**
Pneumatic single-grain seeder
Semoir monograine pneumatique

(30) Priorität: 16.02.2006 DE 102006007155
(43) Veröffentlichungstag der Anmeldung: 22.08.2007
(73) Patentinhaber: Amazonen-Werke H. Dreyer GmbH & Co. KG, 49205 Hasbergen (DE)
(72) Erfinder: Johannaber, Stefan-Jan, 49536 Lienen (DE); Wiebusch, Thorsten, 49205 Hasbergen (DE); Götzen, Nils, 49078 Osnabrück (DE)

(56) Entgegenhaltungen:
- FR-A- 2 291 927
- US-A- 6 142 086
- US-B1- 6 516 733

## Beschreibung

Die Erfindung betrifft eine pneumatische Einzelkornsämaschine gemäß des Oberbegriffes des Patentanspruches 1.

Eine derartige Einzelkornsämaschine ist in der nicht vorveröffentlichen deutschen Patentanmeldung 10 2005 038 155 beschrieben. Wenn die Perforationsreihen durch den Saatgutvorrat geführt werden, lagern sich an den mit einer Druckdifferenz beaufschlagten Perforationen Samenkörner an.

Die FR 22 91 927 A zeigt eine pneumatische Einzelkornsämaschine mit einer drehbar angeordneten Vereinzelungstrommel, in deren Umfangsfläche kreisförmig angeordnete Perforationsreihen angebracht sind. Die Perforationsreihen befinden sich in der in der Vereinzelungstrommel angebrachten Rillen.

Die US 65 16 733 B1 zeigt eine Einzelkornsämaschine mit ein- oder Zwei Reihen von Perforationen die in V-förmigen Oberflächen angeordnet sind. Diesen Perforationen sind Abstreiferelemente zur Verbesserung der Anlagenvereinzelung der Saatkörner zugeordnet.

Der Erfindung liegt die Aufgabe zugrunde, in einfacher Weise sicherzustellen, dass sich bei der Übergabe der Samenkörner von den Perforationsreihen an die zu Ablageeinrichtungen führenden Saatleitungen sich nur noch ein vereinzeltes Saatkorn an jeder Perforation befindet.

Diese Aufgabe wird erfindungsgemäß durch das kennzeichnende Merkmal des Anspruches 1 gelöst. Infolge dieser Maßnahmen stellt das Abstreiferelement sicher, dass sich an jeder Perforationsreihe bei der Übergabe der Saatkörner an die Saatleitungen an jeder Perforation nur noch ein vereinziges Saatkorn befindet. Durch die im Querschnitt dachförmig ausgebildeten Vereinzelungsgürtel und der Anordnung der Perforationslöcher in den Seitendachflächen wird eine besonders vorteilhafte Vereinzelung der Samenkörner erreicht. Somit richtet sich das Abstreiferelement durch das mit dem umlaufenden Firstring zusammenwirkende Führungselement an dem Firstring der dachförmigen Seitenflächen des jeweiligen Vereinzelungsgürtels aus, so dass die Abstreiferelemente exakt zu den Perforationen der Perforationsreihen geführt werden.

Eine vorteilhafte Zuordnung der Abstreiferelemente und deren Ausrichtung zu den sich in den Vereinzelungsgürteln befindlichen Perforationslöchern wird dadurch erreicht, dass die Abstreiferelemente an den Seitenflächen anliegend angeordnet sind.

Eine weitere vorteilhafte Ausrichtung der Abstreiferelemente an den Seitendachflächen, in welchen sich die Perforationslöcher befinden, wird dadurch erreicht, dass die gegenüberliegenden Seitendachflächen benachbarter Vereinzelungsgürtel zugeordneten Abstreiferelemente zu einem Abstreiferpaar in tandemartiger Weise zusammengefasst angeordnet sind. Infolge dieser Maßnahmen richten sich die beiden zu einem Abstreiferpaar zusammengefassten Abstreiferelemente in einfacher Weise selbständig zu den gegenüberliegenden Seitendachflächen aus.

Eine besonders gute Ausrichtung der Abstreiferelemente an den Seitendachflächen zu den Perforationen wird dadurch erreicht, dass die Abstreiferelemente federnd gegen die Seitendachflächen anliegen.

Um Fertigungsungenauigkeiten in einfacher Weise ausgleichen und um dennoch eine ständige Ausrichtung der Abstreiferelemente zu den Perforationsreihen gewährleisten zu können, ist vorgesehen, dass die Abstreiferelemente in axialer Richtung der Drehachse der Vereinzelungstrommel beweglich und/oder bewegbar angeordnet sind.

In einfacher Weise lässt sich das Führungselement als Führungsrolle mit einer umlaufenden Ringnut ausbilden.

Hierdurch wird eine sichere Führung der Führungsrolle auf dem Firstring der dachförmigen Seitenflächen, des jeweiligen Vereinzelungsgürtels erreicht.

Um die den beiden Seitenflächen eines Vereinzelungsgürtels zugeordneten Abstreiferelemente in einfacher Weise führen zu können, ist vorgesehen, dass die den beiden Seitenflächen eines Vereinzelungsgürtels zugeordneten Abstreiferelementen ein gemeinsames Führungselement zugeordnet ist.

Eine vorteilhafte Anordnung des Führungselementes an dem Abstreiferelement wird dadurch erreicht, dass das Führungselement auf der in Drehrichtung der Trommel gesehen hinteren Seite des Abstreiferelementes angeordnet ist.

Um ein Abstreiferelement für schwierige Abstreiffälle in einfacher Weise auszugestalten, ist vorgesehen, dass das Abstreiferelement zumindest zwei unterschiedliche Abstreifbereiche aufweist. Hierbei können die Abstreifbereiche des Abstreifelementes optimal an das zu vereinzelnde Gut und die herrschenden Vereinzelungsbedingungen angepasst werden. Hierbei weisen in vorteilhafter Weise die Abstreiferbereiche eine unterschiedliche Abstreiferagressivität auf.

Hierbei hat sich als vorteilhaft gezeigt, dass es sinnvoll ist, dass der in Drehrichtung der Vereinzelungstrommel zunächst wirksam werdende Abstreiferbereich des Abstreifelementes eine größere Abstreifagressivität als der in Drehrichtung folgende Abstreifbereich aufweist. Hierdurch wird durch den zunächst eine größere Abstreifagressivität aufweisenden Abstreiferbereich eine Grobvereinzelung erreicht, so dass die überwiegende Anzahl der zuviel an einer Perforation anhaftenden Saatkörner abfallen, während der folgende Abstreifbereich dann die endgültige Vereinzelung vornimmt, d. h., es ist sichergestellt, dass nur noch ein Saatkorn an jeder Perforation haften bleibt.

Eine einfache Ausgestaltung eines Abstreiferelementes mit unterschiedlichen Bereichen von Abstreifagressivität lässt sich dadurch verwirklichen, dass der zunächst wirksam werdende Abstreifbereich sägezahnartig ausgebildet ist, während der später wirksam werdende Abstreifbereich mehrere kammartig und/oder beabstandet zueinander angeordnete, vorzugsweise in sich elastische Abstreiferfinger aufweist.

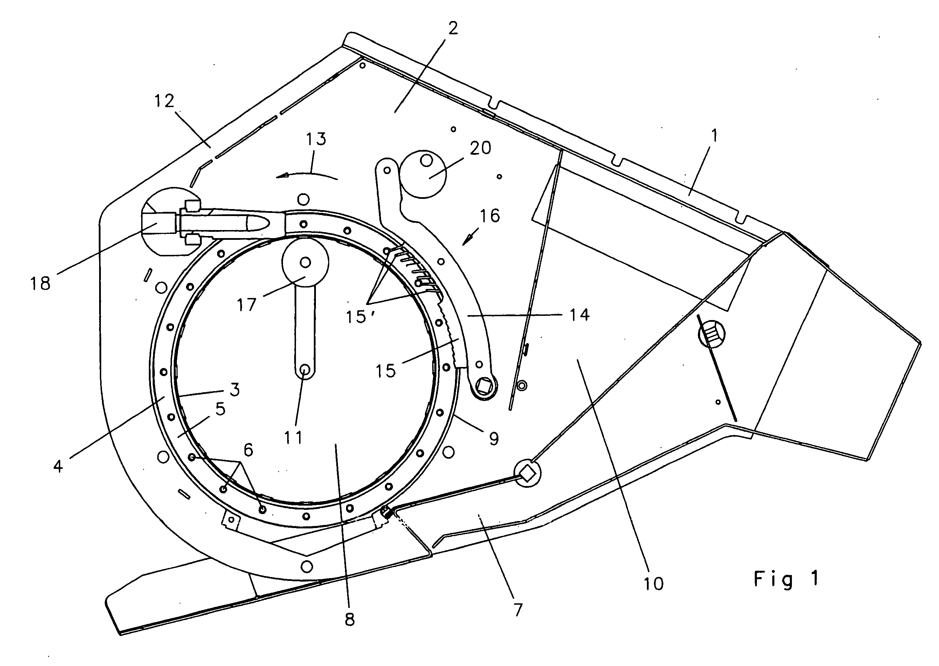

Weitere Einzelheiten der Erfindung sind den übrigen Unteransprüchen, der Beispielsbeschreibung und den Zeichnungen zu entnehmen. Hierbei zeigen
- Fig. 1: die Vereinzelungsvorrichtung der Einzelkornsämaschine in vereinfachter ausschnittsweiser Darstellung in Seitenansicht,
- Fig. 2: die als Vereinzelungstrommel ausgebildete Vereinzelungsvorrichtung mit der Abstreifervorrichtung in perspektivischer Darstellung,
- Fig. 3: die Vereinzelungstrommel mit der Abstreifervorrichtung in der Vorderansicht,
- Fig. 4: die Vereinzelungstrommel mit der Abstreifervorrichtung im Schnitt IV -IV,
- Fig. 5: die Vereinzelungstrommel mit der Abstreifervorrichtung im Schnitt V - V,
- Fig. 6: die Vereinzelungstrommel mit der Abstreifervorrichtung in der Ansicht gemäß Fig. 5 in ausschnittsweiser Darstellung und vergrößertem Maßstab,
- Fig. 7: das Abstreiferelement in Seitenansicht und in vergrößertem Maßstab gemäß Fig. 4,
- Fig. 8: die Vereinzelungsvorrichtung mit einer weiteren Abstreifervorrichtung einer Einzelkornsämaschine in vereinfachter ausschnittsweiser Darstellung und in Seitenansicht,
- Fig. 9: die Vereinzelungstrommel mit Abstreifervorrichtung gemäß Fig. 8 in perspektivischer Darstellung,
- Fig. 10: die Vereinzelungstrommel gemäß Fig. 8 mit der Abstreifervorrichtung in der Vorderansicht,
- Fig. 11: die Vereinzelungstrommel gemäß Fig. 8 mit Abstreifervorrichtung im Schnitt XI - XI,
- Fig. 12: die Vereinzelungstrommel gemäß Fig. 11 mit Abstreifervorrichtung in ausschnittsweiser Darstellung und vergrößertem Maßstab,
- Fig. 13: die Vereinzelungstrommel mit Abstreifervorrichtung im Schnitt XIII - XIII,
- Fig. 14: die Vereinzelungstrommel mit Abstreifervorrichtung im Schnitt XIV - XIV und

- Fig. 15: die Vereinzelungstrommel mit Abstreifervorrichtung in der Darstellung gemäß Fig. 14 in ausschnittsweiser Darstellung und in vergrößertem Maßstab,

Die Sämaschine weist den Vorratsbehälter 1 und die unterhalb des Vorratsbehälters 1 in einem Gehäuse 2 drehbar angeordneten und rotierend angetriebene Vereinzelungstrommel 3 auf. Auf der Umfangsfläche der Vereinzelungstrommel 3 sind kreisförmig angeordnete Vereinzelungsgürtel 4 mit in den dachförmigen Seitenflächen 5 der Vereinzelungsgürtel in Perforationsreihen angeordneten Perforationen 6. angeordnet. Der Vorratsbehälter 1 und das Gehäuse 2 oberhalb der Trommel 3 sind zumindest annähernd druckdicht mittels eines nicht dargestellten Deckels verschlossen. Über den Luftanschlusskasten 7 ist der Vorratsbehälter 1 und das Gehäuse 2 oberhalb der Trommel 3 durch das an den Anschlusskasten 7 angeschlossene und nicht dargestellte Druckluftgebläse mit Druckluft beaufschlagbar, so dass die Perforationsreihen 6 mit einer Druckdifferenz zwischen dem Innenraum 8 der Vereinzelungstrommel 3 und dem Außenbereich 9 der Vereinzelungstrommel 3 beaufschlagt werden. Aufgrund dieser Druckdifferenz lagern sich an den Perforationen 6 der Perforationsreihen der Vereinzelungstrommel 3, wenn diese durch den Saatgutvorrat 10, der sich aufgrund der Führung des Saatgutschaftes bis unterhalb der Drehachse 11 der Trommel 3 erstreckt, Samenkörner an. Der Saatgutvorratsbehälter 1 bzw. das Gehäuse 2 unterhalb des Saatgutvorratsbehälters 1, in dem die Vereinzelungstrommel 3 drehend und abdichtend gelagert ist, weist die einander beabstandeten Seitenwände 12 auf, die sich parallel zur Bewegungsrichtung 13 der Trommel 3 erstrecken und mit der Trommel 3 zumindest annähernd abdichtend zusammenwirken.

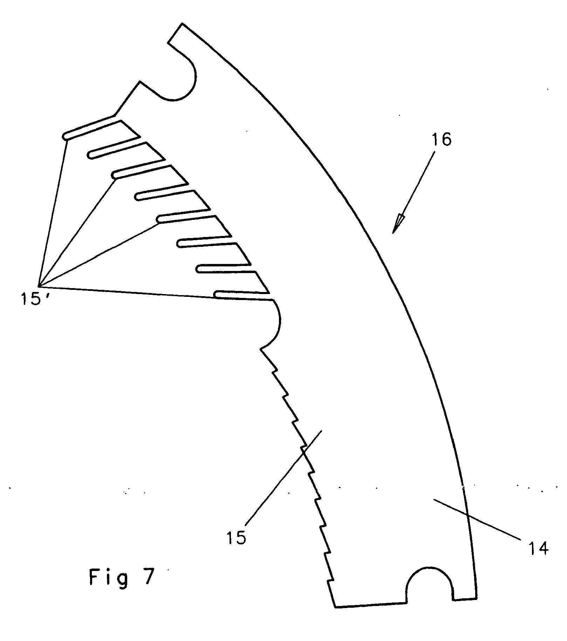

In Drehrichtung 13 gesehen ist oberhalb des Saatgutvorrates die die Abstreiferelemente 14, mit den Abstreifbereichen 15, 15' aufweisende Abstreifervorrichtung 16 angeordnet. Jeder Perforationsreihe 6 ist ein Abstreiferelement 14, mit den Abstreifbereichen 15, 15', wie in Fig. 7 dargestellt ist und noch weiter und näher beschrieben wird, zugeordnet. Im oberen Bereich der Vereinzelungstrommel 3 ist auf der Innenseite 8 ein die Druckdifferenz, an den die Perforationen der Perforationsreihen 6 anliegt, unterbrechendes Element 17 angeordnet. Hieran anschließend ist auf der Außenseite 9 der Trommel 3 jeweils jeder Perforationsreihe 6 eine Saatgutleitung 18 zugeordnet, über welche die sich von den Perforationen 6 lösenden vereinzelten Saatkörner auffangen und durch den in den Leitungen 18 herrschenden Luftstrom zu den als Säscharen ausgebildeten und nicht dargestellten Ausbringelementen geführt werden.

Wie bereits erwähnt, sind die Vereinzelungsgürtel 4 der Vereinzelungstrommel 3 im Querschnitt dachförmig ausgebildet und in den Seitendachflächen 5 sind jeweils die Perforationslöcher 6 der Perforationsreihen angeordnet.

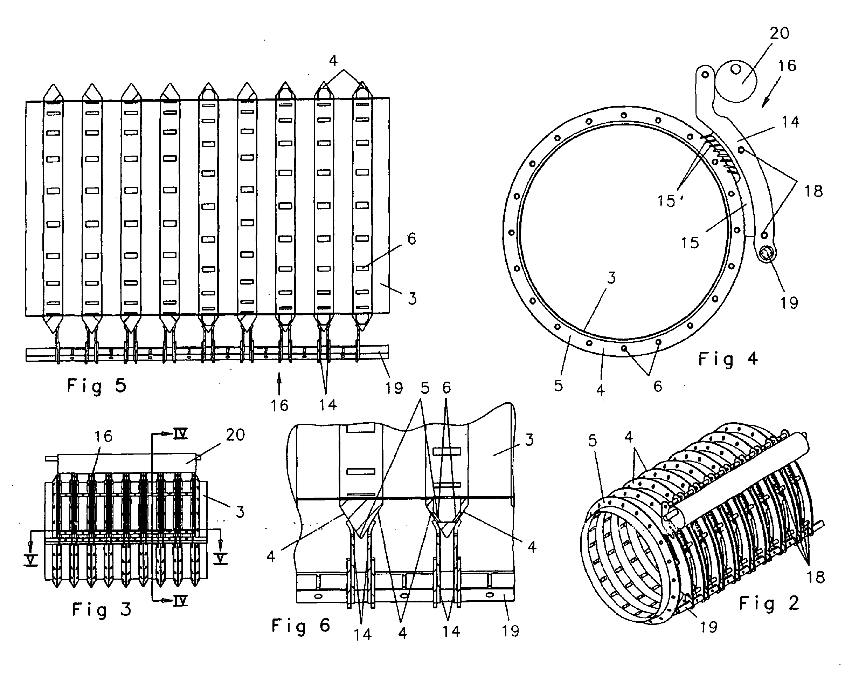

Die Abstreiferelemente 14 sind an den Seitenflächen 5 anliegend angeordnet, wie beispielsweise Fig. 6 zeigt. Die Abstreifvorrichtung 16 weist Abstreiferelemente 14 mit zwei unterschiedlichen Abstreifbereichen 15 und 15' auf. Diese Abstreifbereiche 15 und 15' weisen eine unterschiedliche Abstreifaggressivität auf. Der in Drehrichtung 13 der Vereinzelungstrommel 3 zunächst wirksam werdende Abstreifbereich 15 ist sägezahnartig ausgebildet, wobei der später wirksame werdende Abstreifbereich 15' kammartig ausgebildet ist und beabstandet zueinander angeordnete und in sich elastische Abstreiferfinger aufweist. Die beiden unterschiedlichen Abstreifbereiche 15 und 15' schließen unmittelbar aneinander an. Die Abstreiferfinger des Abstreiferbereiches 15' sind mit ihren freien Ende schleppend zur Drehrichtung 13 des Vereinzelungsorgans 3 angestellt. Durch die Ausgestaltung der Abstreifbereiche 15 und 15' weist der in Drehrichtung 13 der Vereinzelungstrommel 3 zunächst wirksam werdende Abstreifbereich 15 der Abstreifervorrichtung 16 durch die sägezahnartige Ausbildung ein größere Abstreifaggressivität als der in Drehrichtung 13 folgende und von den Abstreiferfingern gebildete Abstreifbereich 15' auf.

Die den gegenüberliegenden Seitendachflächen 5 benachbarter Vereinzelungsgürtel 4 zugeordneter Abstreifelemente 14 sind mittels der Verbindungselemente 18 zu einem Abstreiferpaar in tandemartiger Weise zusammengefasst. Die Abstreifelemente 14 liegend federnd gegen die Seitendachflächen 5 an. Durch die Anlage der Abstreiferelemente 14 gegen die Seitendachflächen 5, die schräg zur Radialebene verlaufen, können sich die Abstreiferelemente 14 an den Seitendachflächen 5 der Vereinzelungsgürtel 4 ausrichten.

Des Weiteren sind die Abstreiferelemente 14 in axialer Richtung der Drehachse der Vereinzelungstrommel 3 beweglich bzw. bewegbar auf der Halterungswelle 19, die an den Seitenwänden 12 des Gehäuses 2 befestigt ist, angeordnet.

Die einzelnen Abstreifelemente 14 können mittels der exzentrisch gelagerten Einstellelemente 20 in Bezug auf die Perforationen 6 der Perforationsreihen, die in den Seitendachflächen 5 der Vereinzelungsgürtel 4 angeordnet sind, eingestellt werden, um so optimal auf die jeweilige Vereinzelungseigenschaften des auszubringenden Saatgutes angepasst werden.

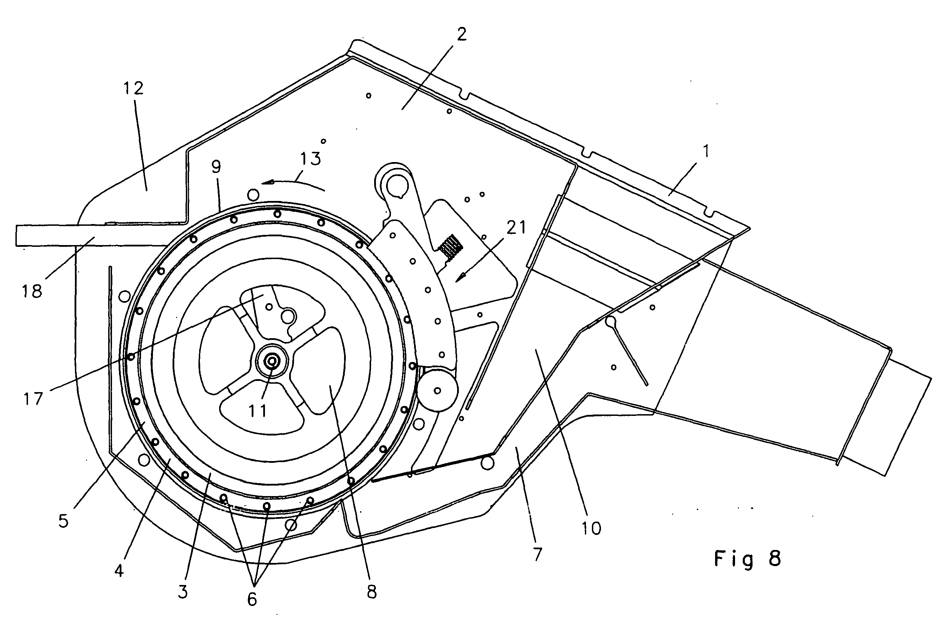

Das Ausführungsbeispiel gemäß den Fig. 8 bis 15 unterscheidet sich durch die Ausgestaltung der Abstreifvorrichtung 21 und der Ausrichtung der Abstreiferelemente 22 der Abstreifervorrichtung 21 gegenüber den Vereinzelungsgürteln 4.

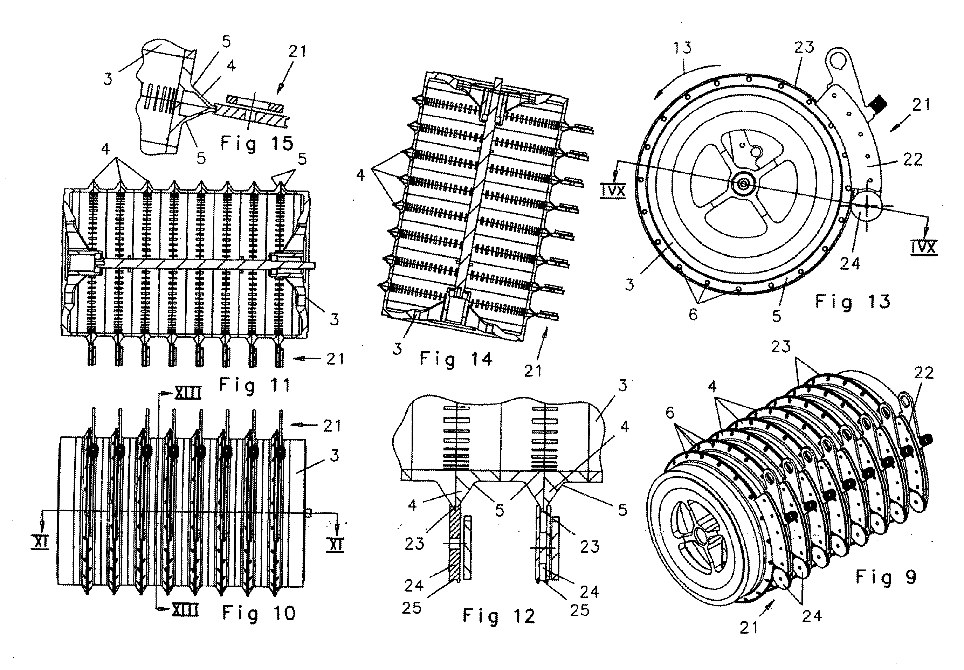

Die Abstreifvorrichtungen 21 gemäß Fig. 8 bis 15 weisen jeweils ein mit den umlaufenden Firstring 23 der dachförmigen Seitenflächen 5 des Vereinzelungsgürtels 4 zusammenwirkendes Führungselement 24 auf. Das Führungselement 24 ist als Führungsrolle mit einer umlaufenden Ringnut 25 ausgebildet. Diese Ringnut 25 reitet quasi auf den umlaufenden Firstring 23 der dachförmigen Seitenfläche 5, wie Fig. 8, 12 und 13 zeigen. Die den beiden Seitenflächen 5 eines Vereinzelungsgürtels 4 zugeordneten Abstreiferelemente 22 sind zu einem Abstreiferpaar zusammengefasst und es ist ihnen ein gemeinsames als Führungsrolle 24 ausgebildetes Führungselement zugeordnet. Das Führungselement 24 ist auf der in Drehrichtung 13 der Trommel 3 hinteren Seite des Abstreiferelementes 22 angeordnet, wie beispielsweise Fig. 9 und 13 zeigen. Das Abstreiferelement 22 der Abstreifervorrichtung 21 ist in nicht dargstellter Weise mittels einer Haltevorrichtung an dem Gehäuse 2 befestigt und mit einer nicht dargestellten Einstelleinrichtung im Abstand zu den Perforationen 6, die in den Seitendachflächen 5 der Vereinzelungsgürtel 4 angeordnet sind, einstellbar. Hierdurch kann die jeweilige Einstellintensität entsprechend des ausgebrachten Saatgutes angepasst werden, damit die Saatkörner sicher vereinzelt werden, damit jeweils nur ein Saatkorn vor der Übergabe an die Austragsleitung 18 an der Perforation 6 anhaftet. Die Abstreiferelemente 22 sind in axialer Richtung der Drehachse der Vereinzelungstrommel 3 beweglich und bewegbar angeordnet.

## Patentansprüche

1. Pneumatische Einzelkornsämaschine mit einem Saatgutvorratsbehälter (1) und zumindest einer drehbar angeordneten Vereinzelungstrommel (3), in deren Umfangsfläche kreisförmig angeordnete Perforationsreihen (6) angebracht sind, einem Gebläse, mittels welchem eine Druckdifferenz zwischen dem Innenraum (8) der Vereinzelungstrommel (3) und dem Außenbereich (9) der Vereinzelungstrommel (3) erzeugbar ist, so dass, wenn die Vereinzelungstrommel (3) durch den Saatgutvorrat (10) geführt wird, sich an den Perforationen (6) der perforierten Trommel (3) Samenkörner anlagern, wobei der Saatgutvorratsbehälter (1) zwei voneinander beabstandete Seitenwände aufweist, die sich parallel zur Bewegungsrichtung (13) der Trommel (3) erstrecken und mit der Trommel (3) zumindest annähernd abdichtend zusammenwirken, wobei die Vereinzelungstrommel (3) gegenüber der Trommeloberfläche im Bereich der Perforationsreihen (6) erhöht ringförmig umlaufende Vereinzelungsgürtel (4) aufweist, **dadurch gekennzeichnet, dass** jeder Perforationsreihe (6) zumindest ein Abstreiferelement (14,22) zugeordnet ist, dass die Vereinzelungsgürtel (4) im Querschnitt dachförmig ausgebildet sind, dass in den Seitendachflächen (5) die Perforationslöcher (6) angeordnet sind, und dass die Abstreiferelemente (22) ein mit dem umlaufenden Firstringen (23) der dachförmigen Seitenflächen (5) zusammenwirkendes Führungselement aufweisen.

2. Einzelkornsämaschine nach Anspruch 1, **dadurch gekennzeichnet, dass** die Abstreiferelemente (14,22) an den Seitenflächen (5) anliegend angeordnet sind.

3. Einzelkornsämaschine nach einem oder mehreren der vorstehenden Ansprüche, **dadurch gekennzeichnet, dass** die gegenüberliegenden Seitendachflächen (5) benachbarter Vereinzelungsgürtel (4) zugeordneten Abstreiferelemente (14,22) zu einem Abstreiferpaar in tandemartiger Weise zusammengefasst angeordnet sind.

4. Einzelkornsämaschine nach einem oder mehreren der vorstehenden Ansprüche, **dadurch gekennzeichnet, dass** die Abstreiferelemente (14,22) federnd gegen die Seitendachflächen (5) anliegen.

5. Einzelkornsämaschine nach einem oder mehreren der vorstehenden Ansprüche, **dadurch gekennzeichnet, dass** die Abstreiferelemente (14,22) in axialer Richtung der Drehachse der Vereinzelungstrommel (3) beweglich und/oder bewegbar angeordnet sind.

6. Einzelkornsämaschine nach Anspruch 1, **dadurch gekennzeichnet, dass** das Führungselement (24) als Führungsrolle mit einer umlaufenden Ringnut (25) ausgebildet ist.

7. Einzelkornsämaschine nach Anspruch 1, **dadurch gekennzeichnet, dass** die den beiden Seitenflächen (5) eines Vereinzelungsgürtels (4) zugeordneten Abstreiferelementen (22) ein gemeinsames Führungselement (24) zugeordnet ist.

8. Einzelkornsämaschine nach Anspruch 1, **dadurch gekennzeichnet, dass** das Führungselement (24) auf der in Drehrichtung (13) der Trommel (3) gesehen hinteren Seite des Abstreiferelementes (22) angeordnet ist.

9. Einzelkornsämaschine nach einem oder mehreren der vorstehenden Ansprüche, **dadurch gekennzeichnet, dass** das Abstreiferelement (14) zumindest zwei unterschiedliche Abstreifbereiche (15,15') aufweist.

10. Einzelkornsämaschine nach Anspruch 9, **dadurch gekennzeichnet, dass** die Abstreifbereiche (15,15') eine unterschiedliche Abstreifagressivität aufweisen.

11. Einzelkornsämaschine nach Anspruch 10, **dadurch gekennzeichnet, dass** der in Drehrichtung (13) der Vereinzelungstrommel (3) zunächst wirksam werdende Abstreifbereich (15) des Abstreifelementes (14) eine größere Abstreifagressivität als der in Drehrichtung (13) folgende Abstreifbereich (15') aufweist.

12. Einzelkornsämaschine nach einem oder mehreren der Ansprüche 9 bis 11, **dadurch gekennzeichnet, dass** der zunächst wirksam werdende Abstreifbereich (15) sägezahnartig ausgebildet ist, während der später wirksam werdende Abstreifbereich (15') mehrere kammartig und/oder beabstandet zueinander angeordnete, vorzugsweise in sich elastische Abstreiferfinger aufweist.

13. Einzelkornsämaschine nach einem oder mehreren der Ansprüche 9 bis 12, **dadurch gekennzeichnet, dass** die beiden unterschiedlichen Abstreifbereiche (15,15') unmittelbar aneinander anschließen.

14. Einzelkornsämaschine nach einem oder mehreren der Ansprüche 9 bis 12, **dadurch gekennzeichnet, dass** die beiden unterschiedlichen Abstreifbereiche beabstanden zueinander angeordnet sind.

15. Einzelkornsämaschine nach einem oder mehreren der Ansprüche 9 bis 12, **dadurch gekennzeichnet, dass** zwischen den beiden Abstreifbereichen sich ein Beruhigungsbereich befindet.

16. Einzelkornsämaschine nach einem oder mehreren der Ansprüche 9 bis 12, **dadurch gekennzeichnet, dass** zwischen den beiden unterschiedlichen Abstreifbereichen sich ein Übergangsabstreifbereich befindet.

17. Einzelkornsämaschine nach Anspruch 12, **dadurch gekennzeichnet, dass** die Abstreiferfinger mit ihren freien Enden schleppend zur Drehrichtung (13) des Vereinzelungsorgans (3) angestellt sind.

## Claims

1. Pneumatic single-grain seeder with a seed hopper (1) and at least one rotatably disposed separating drum (3), rows of perforations (16) being disposed in a circular manner in the circumferential surface of the said separating drum, a blower, by means of which a pressure difference can be generated between the interior (8) of the separating drum (3) and the outer region (9) of the separating drum (3), such that when the separating drum (3) is guided through the seed material store (10), grains of seed are taken up by the perforations (6) of the perforated drum (3), wherein the seed hopper (1) includes two lateral walls, which are spaced apart, extend parallel to the direction of movement (13) of the drum (3) and interact with the drum (3) at least in an approximately sealing manner, wherein the separating drum (3) includes separating belts (4) that extend around the circumference in a ring-shaped manner and are raised relative to the drum surface in the region of the rows of perforations (6), **characterised in that** each row of perforations (6) has associated therewith at least one scraper element (14, 22), **in that** the separating belts (4) have a roof-shaped cross-section, **in that** the perforation holes (6) are disposed in the lateral roof faces (5) and **in that** the scraper elements (22) include a guide element that interacts with the circumferential first rings (23) of the roof-shaped lateral faces (5).

2. Single-grain seeder according to claim 1, **characterised in that** the scraper elements (14, 22) are disposed abutting against the lateral faces (5).

3. Single-grain seeder according to one or more of the preceding claims, **characterised in that** the scraper elements (14, 22) associated with oppositely situated lateral roof faces (5) of adjacent separating belts (4) are combined in the manner of a tandem to form a scraper pair.

4. Single-grain seeder according to one of more of the preceding claims, **characterised in that** the scraper elements (14, 22) abut against the lateral roof faces (5) in a resilient manner.

5. Single-grain seeder according to one or more of the preceding claims, **characterised in that** the scraper elements (14, 22) are disposed so as to be displaceable and/or movable in the axial direction of the axis of rotation of the separating drum (3).

6. Single-grain seeder according to claim 1, **characterised in that** the guide element (24) is in the form of a guide roller with a circumferential annular groove (25).

7. Single-grain seeder according to claim 1, **characterised in that** the scraper elements (22) associated with the two lateral faces (5) of a separating belt (4) have associated therewith a common guide element (24).

8. Single-grain seeder according to claim 1, **characterised in that** the guide element (24) is disposed on the rear side of the scraper element (22) when viewed in the direction of rotation (13) of the drum (3).

9. Single-grain seeder according to one or more of the preceding claims, **characterised in that** the scraper element (14) includes at least two different scraper regions (15, 15').

10. Single-grain seeder according to claim 9, **characterised in that** the scraper regions (15, 15') have a different scraping aggressiveness.

11. Single-grain seeder according to claim 10, **characterised in that** the scraping aggressiveness of the scraper region (15) of the scraper element (14) first becoming operative in the direction of rotation (13) of the separating drum (3) is greater than that of the scraper region (15') following in the direction of rotation (13).

12. Single-grain seeder according to one or more of claims 9 to 11, **characterised in that** the scraper region (15) becoming operative first is realised in a saw-toothed manner, whilst the scraper region (15') becoming operative subsequently has a plurality of preferably resilient scraper fingers that are disposed in a comb-like manner and/or are spaced apart.

13. Single-grain seeder according to one or more of claims 9 to 12, **characterised in that** the two different scraper regions (15, 15') connect to each other in a direct manner.

14. Single-grain seeder according to one or more of claims 9 to 12, **characterised in that** the two different scraper regions are disposed spaced apart.

15. Single-grain seeder according to one or more of claims 9 to 12, **characterised in that** a calming region is situated between the two scraper regions.

16. Single-grain seeder according to one or more of claims 9 to 12, **characterised in that** a transition scraper region is situated between the two different scraper regions.

17. Single-grain seeder according to claim 12, **characterised in that** the scraper fingers are placed with their free ends trailing relative to the direction of rotation (13) of the separating member (3).

## Revendications

1. Semoir pneumatique monograine qui comporte :
- un réservoir d'alimentation en semence (1) et au moins un tambour séparateur (3), monté à rotation, et dont la surface périphérique comporte des rangées de perforations (6) réparties sur des cercles,
- une machine soufflante qui créée une différence de pression entre le volume intérieur (8) du tambour séparateur (3) et la zone extérieure (9) du tambour séparateur (3) de façon que lorsque le tambour séparateur (3) passe dans la réserve de semence (10), les graines de semence se fixent sur les perforations (6) du tambour perforé (3),
le réservoir d'alimentation en semence (1) comporte deux parois latérales écartées l'une de l'autre, qui s'étendent parallèlement à la direction de déplacement (13) du tambour (3) et coopèrent au moins de façon sensiblement étanche avec le tambour (3),
le tambour séparateur (3) comporte, dans la région des rangées de perforations (6), des ceintures de séparation (4), périphériques, de forme annulaire, en saillie par rapport à la surface extérieure du tambour,
**caractérisé en ce qu'**
à chaque rangée de perforations (6) est associé au moins un élément racleur (14, 22),
les ceintures de séparation (4) ont une section en forme de dièdre,
les surfaces latérales (5) du dièdre comportent les orifices de perforation (6), et
les éléments racleurs (22) ont un élément de guidage coopérant avec les anneaux de crête (23), périphériques, des surfaces latérales (5) des dièdres.

2. Semoir monograine selon la revendication 1,
**caractérisé en ce que**
les éléments racleurs (14, 22) sont prévus de façon à être appliqués contre les surfaces latérales (5).

3. Semoir monograine selon l'une ou plusieurs des revendications précédentes,
**caractérisé en ce que**
les éléments racleurs (14, 22), associés aux surfaces latérales (5) opposées des formes de dièdre de ceintures de séparation (4) voisines, sont regroupés en tandem pour former une paire de racleurs.

4. Semoir monograine selon l'une ou plusieurs des revendications précédentes,
**caractérisé en ce que**
les éléments racleurs (14, 22) sont appliqués élastiquement contre les surfaces latérales (5) des formes de dièdre.

5. Semoir monograine selon l'une ou plusieurs des revendications précédentes,
**caractérisé en ce que**
les éléments racleurs (14, 22) sont mobiles et/ou peuvent être déplacés dans la direction radiale de l'axe de rotation du tambour séparateur (3).

6. Semoir monograine selon la revendication 1,
**caractérisé en ce que**
l'élément de guidage (24) est réalisé sous la forme d'un galet de guidage avec une rainure annulaire périphérique (25).

7. Semoir monograine selon la revendication 1,
**caractérisé en ce que**
les éléments racleurs (22) associés aux deux surfaces latérales (5) d'une ceinture de séparation (4) ont un élément de guidage (24) commun.

8. Semoir monograine selon la revendication 1,
**caractérisé en ce que**
l'élément de guidage (24) est prévu sur le côté arrière de l'élément racleur (22) vu dans le sens de rotation (13) du tambour (3).

9. Semoir monograine selon l'une ou plusieurs des revendications précédentes,
**caractérisé en ce que**
l'élément racleur (14) comporte au moins deux zones de raclage (15, 15') différentes.

10. Semoir monograine selon la revendication 9,
**caractérisé en ce que**
les zones de raclage (15, 15') ont un mordant de raclage différent.

11. Semoir monograine selon la revendication 10,
**caractérisé en ce que**
la zone de raclage (15) de l'élément racleur (14) qui intervient d'abord dans le sens de rotation (13) du tambour séparateur (3) a un mordant de raclage plus important que la zone de raclage (15') qui suit selon le sens de rotation (13).

12. Semoir monograine selon une ou plusieurs des revendications 9 à 11,
**caractérisé en ce que**
la zone de raclage (15) qui intervient d'abord a une forme en dents de scie alors que la zone de raclage (15') qui intervient ensuite comporte plusieurs doigts de raclage, de préférence naturellement élastiques en forme de peigne et/ou écartés les uns des autres.

13. Semoir monograine selon une ou plusieurs des revendications 9 à 12,
**caractérisé en ce que**
les deux zones de raclage (15, 15') différentes se rejoignent directement.

14. Semoir monograine selon une ou plusieurs des revendications 9 à 12,
**caractérisé en ce que**
les deux zones de raclage (15, 15') différentes sont écartées l'une de l'autre.

15. Semoir monograine selon une ou plusieurs des revendications 9 à 12,
**caractérisé par**
une zone à effet calmant entre les deux zones de raclage.

16. Semoir monograine selon une ou plusieurs des revendications 9 à 12,
**caractérisé par**
une zone de raclage transitoire entre les deux zones de raclage différentes.

17. Semoir monograine selon la revendication 12,
**caractérisé en ce que**
les doigts de raclage sont disposés de façon que leur extrémité libre soit tirée dans le sens de rotation (13) de l'organe séparateur (3).
